# EUROPEAN PATENT APPLICATION

(11) **EP 3 698 627 A1**
(43) Date of publication of application: **26.08.2020**
(21) Application number: 20157318.5
(22) Date of filing: 14.02.2020
(51) Int. Cl.: A01M 1/02

(54) **A METHOD AND DEVICE FOR BED BUG AND PEST DETECTION**

(30) Priority: 21.02.2019 US 201916281089; 08.10.2019 US 201916595919
(71) Applicant: Virag, Brian Jeffrey, Encino, CA 01436 (US)
(72) Inventor: Virag, Brian Jeffrey, Encino, CA 01436 (US)
(74) Representative: Preda, Raluca-Laura

(57) **Abstract**

The present invention identifies bed bugs using a specially designed probing device designed to inspect the small, dark spaces of furnishings and accommodations where bed bugs can hide. The present invention captures an image of the inspected space with a camera, a light component at the end of a probing unit and a two-point spacer for stabilizing the device during inspection and capturing of an image that is transmitted wirelessly to a computing device for closer inspection and verification of the presence of a bed bug.

## Description

### Field of the Invention

This invention relates to an insect or pest detection and monitoring method and device. This invention is particularly suited for detecting bed bugs.

### Background

Cimex lectularius, or bed bugs as they are commonly known, are insects that feed on human blood and usually feed at night. Their bites can result in rashes, blisters or allergic reactions. These pests are highly undesirable and are hitchhiker insects that attach themselves to luggage and other belongings to move to new locations. Businesses, like hotels, go to great lengths to avoid the presence of bed bugs. If a hotel has a reputation for having bed bugs, business can be severely and negatively impacted.

Bed bugs are spread by being carried to new locations, typically on personal items like luggage. It is common for bed bugs to be found in hotels and other high-density areas. During the day, bed bugs hide in dark areas, like mattress seams and small cracks in nearby walls. Bed bugs feed at night and are attracted to their human hosts by body heat.

Infestations can grow rapidly. A single bed bug can result in 300 adults and 1,000 new eggs in as little as 3 months. Thus, it is imperative that the first signs of an infestation be identified so that extermination procedures can be promptly initiated.

To avoid a bed bug infestation, it is imperative to closely inspect sleeping accommodations for bed bugs prior to and following each use for signs of the pests.

It may be difficult to properly inspect the space around a mattress, headboard and box spring for bed bugs due to the small, dark nature of their preferred environment. Bed bugs hide in cracks and crevices to avoid detection.

Mature bed bugs are very similar in size and appearance to an apple seed or piece of lint. Young bed bugs are even smaller in size or lighter in color and are difficult to identify.

In addition, wireless technology has been used in various industries for various products to make those products easier to use and more practical. Wireless technology uses radio frequency technology to transmit information from a transmitter to a receiver, thus making the need for chorded products unnecessary.

The present invention solves this problem.

### Summary of the Invention

The present invention identifies bed bugs using a specially designed probing device designed to inspect small, dark spaces including the spaces surrounding a mattress, box spring, picture frames, night stands and other small, narrow cracks and crevices of a bed or room where bed bugs can be found. The present invention captures an image of the inspected space with a camera at the end of a probing unit and transmits the image to computing device for closer inspection and verification of the presence of a bed bug.

In one embodiment of the present invention, the probing unit can be manipulated to a bent position to facilitate a thorough inspection. The probing unit may be bent at an angle determined by the user.

The device may be attached to a computing device by a wired connection or the device may be wirelessly attached to a computing device. In one embodiment of the present invention, radio frequency technology is used to communicate information to the computing unit. A transmitter is located in the probing unit and a receiver is located in a computing unit. Images captured by the probing unit are transmitted to the computing unit by electromagnetic (radio) signals that encode information captured by the probing unit. The receiver accepts the signal, decodes it and passes it on to the computing device.

The transmitter and the receiver may be paired so that they are operating at the same frequency on the same channel using a common identification code. Pairing methods include, but are not limited to, a pairing sequence, pre-pairing and external driver.

The present invention may also include and encryption scheme to encode data into an unreadable format to protect from interference or unintended transmission to an unauthorized receiver.

In another embodiment of the present invention, infrared technology may be used to communicate between the transmitter and a receiver.

A Bluetooth connection may also be used to transmit a signal from a transmitter and a receiver.

An antenna may be used to transmit a signal from a transmitter to a receiver.

A WiFi connection may be used to transmit a signal from the wand to the computing device.

It is also contemplated that other types of technology, both in existence and yet to be developed, pay be used as a wireless connection between the endoscope and the computing unit.

In one embodiment of the present invention, a camera is positioned at the end of a probe, for example an endoscope. The camera is utilized to capture images of bed bugs that infest the affected area. The camera may be equipped with a light and/or a mirror feature for capturing clear images for transmission by the endoscope to a computing device, for example a smart phone. Captured images can be used to confirm the presence of a bed bug infestation.

In a preferred embodiment of the present invention, a shark fin or spacer with two points is positioned at the end of a probe to stabilize the probe during inspection. A camera is positioned between the two points to detect and capture images of bed bugs or other pests.

In one embodiment of the present invention, bed bugs are detected using sensors designed to detect the presence of a bed bug, in lieu of visual confirmation of the presence of an infestation. Types of sensors include, but are not limited to, sniffer, thermal and light sensors. A sniffer, or olfactory sensor, detects the presence of aldehyde pheromones. Bed bugs emit aldehyde pheromones, thus where this pheromone is present, it is an indication that an infestation exists. A thermal, or heat signature detector, sensor detects the presence of heat emitted by bed bugs. Thus, where a thermal sensor detects the presence of body heat, it is an indication that bed bugs are present in the inspected area, despite the lack of visual confirmation. A light sensor, or photo sensor, can also be used to detect evidence of a bed bug infestation. A light sensor can include infrared or ultraviolet wavelengths sensors.

The present invention also discloses a method of using the described device for inspecting bedding for bed bugs.

### Brief Description of Drawings

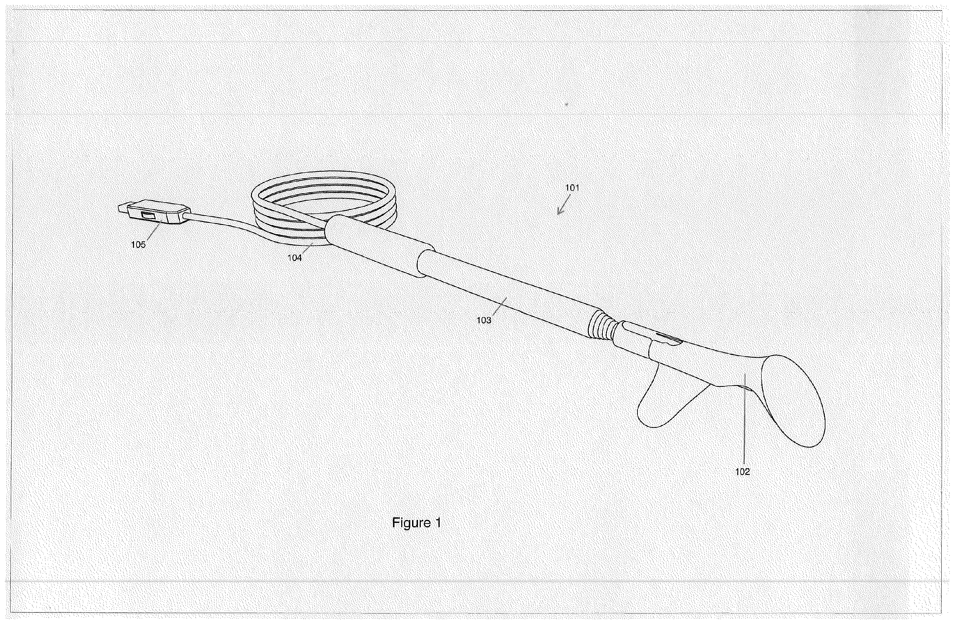

Figure 1 discloses one embodiment of the present invention **101.** The USB end **105** is for attachment to a computing device. A connecting wire **104,** connects the USB end to an endoscope in a retracted position **103** and a shark fin attachment **102** containing a light and mirror component for capturing images of a bed bug.

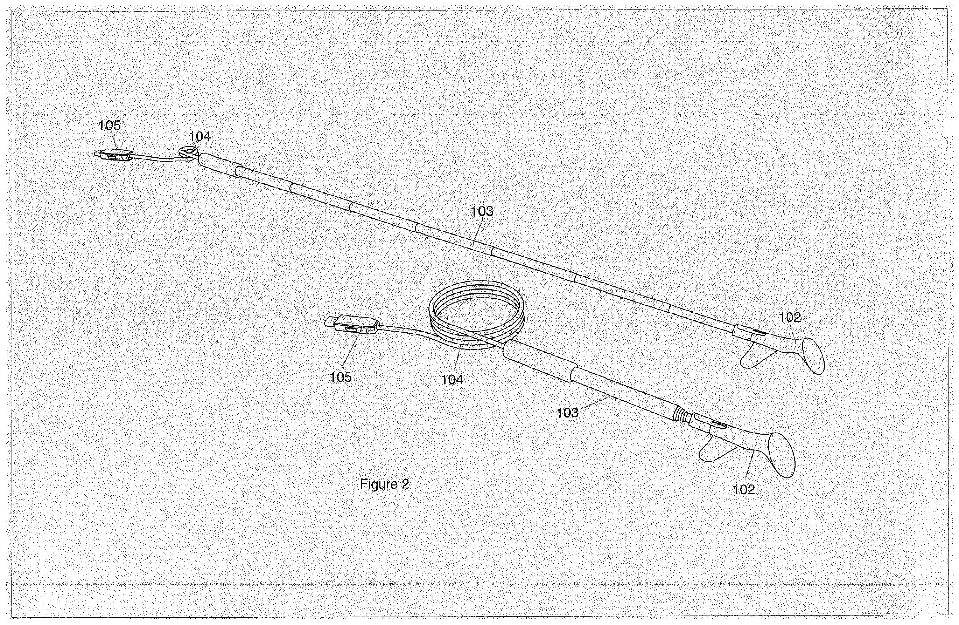

Figure 2 discloses one embodiment of the present invention comprising a USB end **105** for attachment to a computing device, a connecting wire **104,** an endoscope in an extended position **103** and a shark fin attachment **102** containing a light and mirror component.

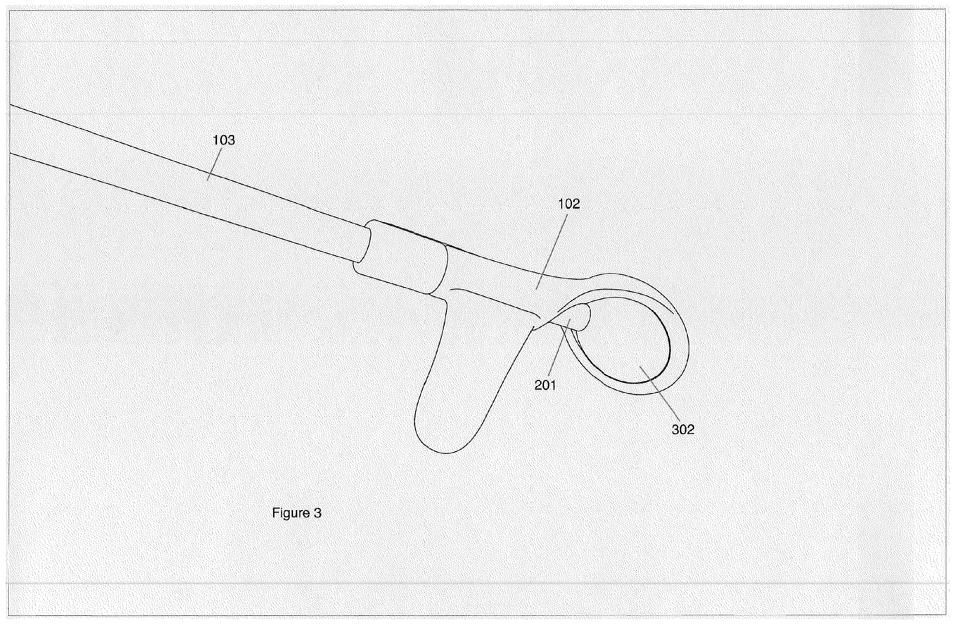

Figure 3 discloses the camera end of the probing devices **103** with the shark fin attachment connected **102,** the shark fin attachment comprises a mirror component **302** and a light component **301.**

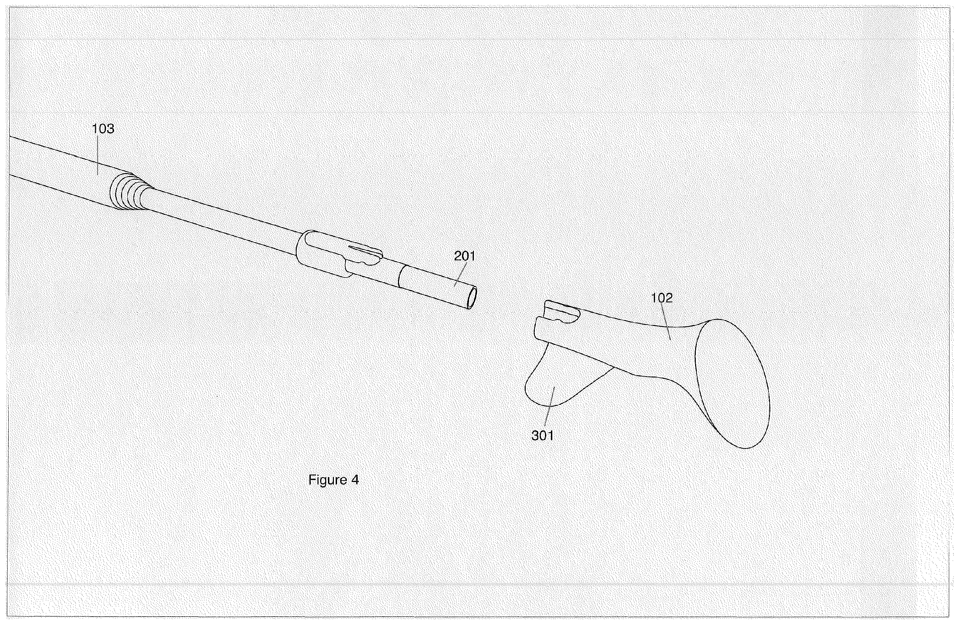

Figure 4 discloses the camera end **201** of the probing device **103** with the shark fin **301** attachment **102** detached.

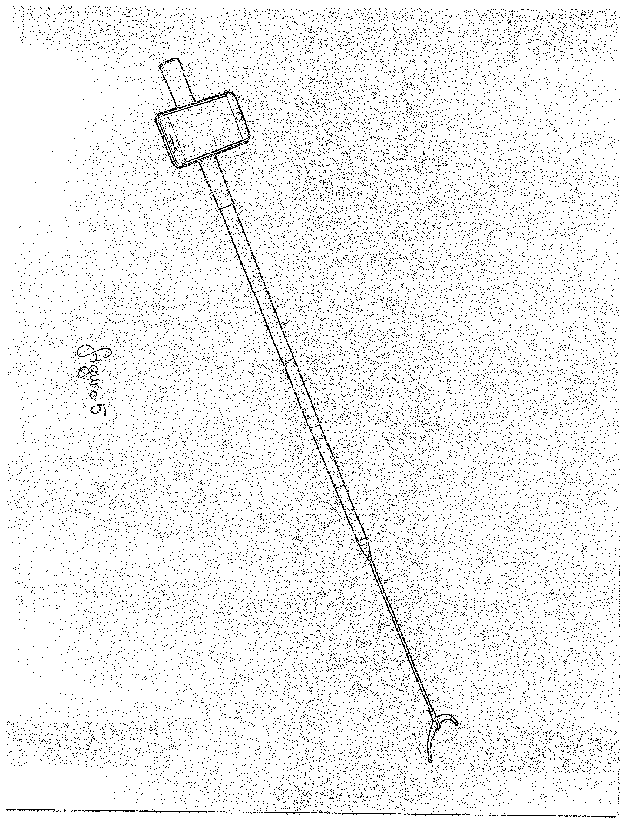

Figure 5 discloses one embodiment of the two-point spacer of the present invention.

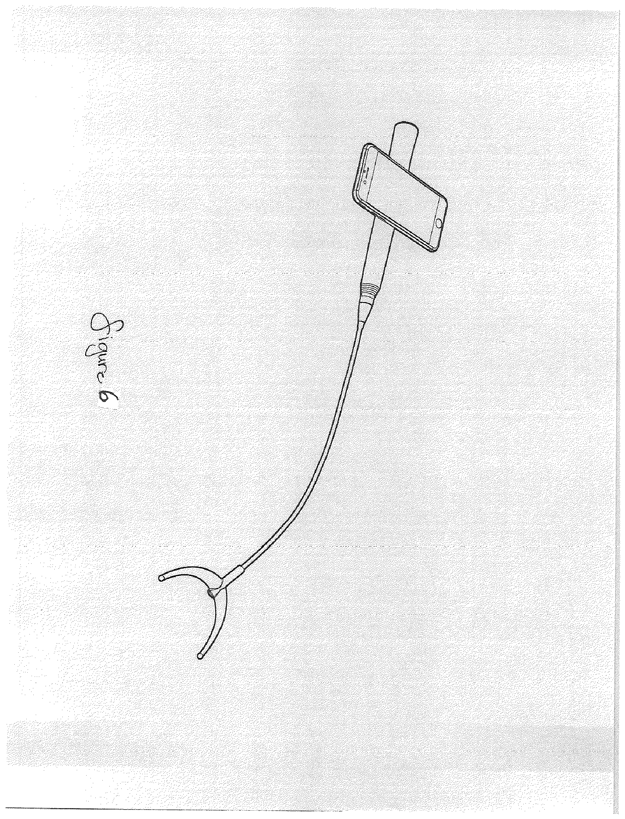

Figure 6 discloses the present invention in a bent position with a computing device attached.

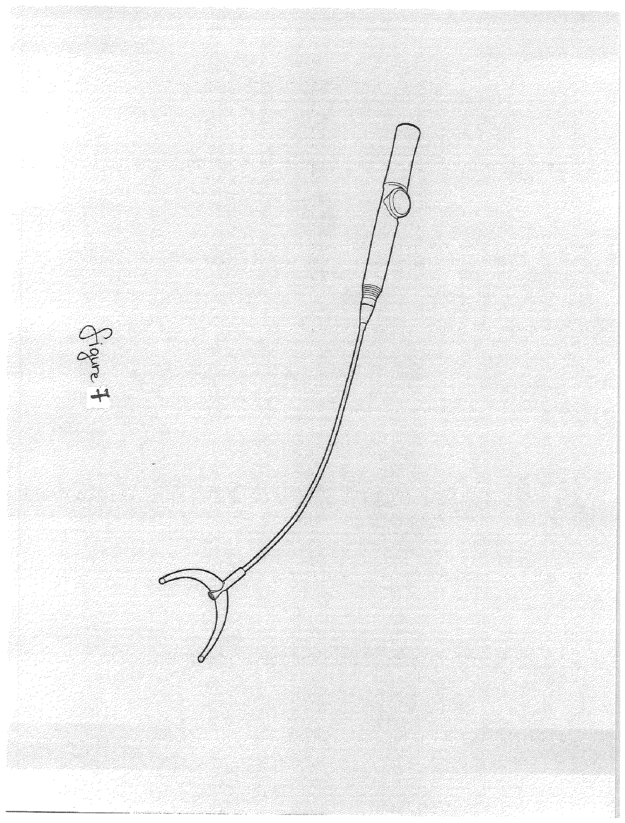

Figure 7 discloses the present invention in a bent position without a computing device attached.

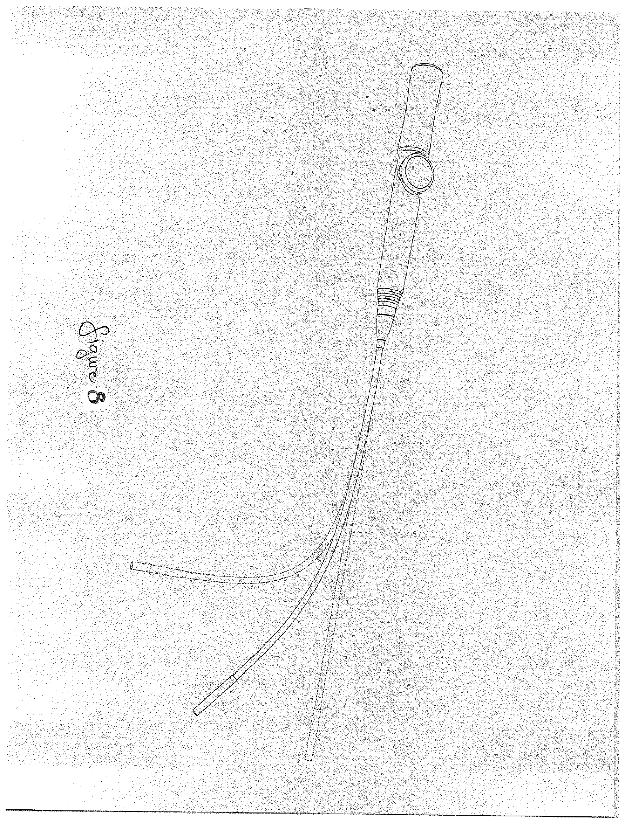

Figure 8 discloses the present invention in bent positions relative to an unbent position.

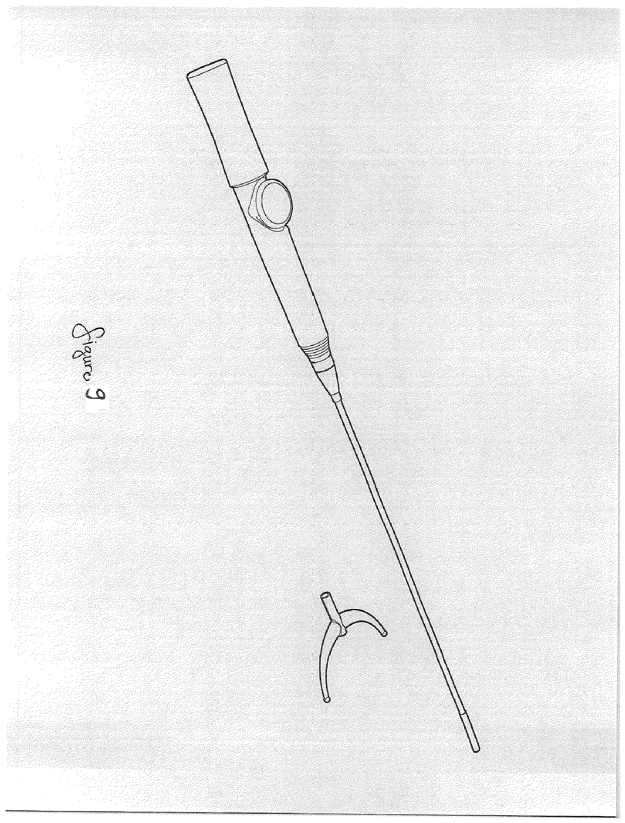

Figure 9 discloses the present invention where the two-point spacer is detached.

### Detailed Description of the Invention

As used herein, the words or terms used herein have the following definitions:
A bed bug is a member of the Cimex lectularius species of insects that feed on human blood. It is a wingless hemipterous bug that is known to infest human dwellings.

An endoscope is an illuminated, tubular instrument for inspection of bed bugs in a specified area.

A computing device is a smart phone, tablet, PC or other device that can receive image transmissions from a camera for inspection of bed bugs in a specified area.

A camera is a device that consists of a lightproof chamber with an aperture fitted with a lens and a shutter through which the image of an object is projected onto a surface for recording or for translation into electrical impulses.

A mirror is a polished, smooth surface that forms images by reflection.

A shark fin is a removable attachment for placement at the camera end of the present invention. It is designed to capture images on the mirror component of the invention for reflection onto the camera component of the invention so that images are not too far from or close to the camera and clear images may be captured. A light component allows the image to be viewed on the mirror component and reflected on to the camera component.

In one embodiment, the shark fin is a two-point spacer attachment that may be placed at the camera end of the probe for stabilizing the device during inspection and capturing images. In another embodiment of the present invention, the two-point spacer is not a removeable attachment, it is a fixed part of the endoscope.

An examiner is the person using the disclosed invention.

In one embodiment of the present invention, the probing device may be bent at a 45-degree angle to facilitate optimal inspection for bed bugs. The device may also be bent at a 90-degree angle for inspection of bed bugs or other pests. The device may be bent at any angle that would facilitate optimal inspection for bed bugs.

A wireless connection is a transmission that takes place without the use of a physical wire, cord or cable.

In one embodiment of the present invention, the device comprises an endoscope for capturing images of bed bugs in an inspected space.

In another embodiment of the present invention, the device further comprises a light component that is used to illuminate dark spaces for better inspection. In a preferred embodiment, the light is an LED light.

In another embodiment of the present invention, the device further comprises a mirror component. The mirror component is used to reflect images from an inspected surface for capture by the camera component.

In another embodiment of the present invention, the mirror and/or light components of the device may comprise a removable "shark fin" component. The shark fin component attaches to the camera end of the endoscope for capturing clear images of a bed bug in an inspected space. The image is captured at the optimal distance from the camera lens for viewing and transmission.

In one embodiment of the present invention, the endoscope includes a telescoping feature, which allows the user to access spaces that are difficult to reach by the examiner. For example, it may be difficult for an examiner to crawl under a bed to inspect the middle of a box spring. Using the telescoping feature of the present invention, the camera end of the endoscope can reach the middle of a box spring for inspection and images of the space can be captured by the camera for transmission to a computing device.

The endoscope may also be used in a retracted position for inspection of small spaces near the examiner.

In another embodiment of the present invention, images captured by the camera are transmitted to a receiving device. A smart phone is a device commonly used by consumers; it is a preferred embodiment of the present invention that the computing device be a smart phone.

However, it is contemplated that a receiving device can be a smart phone, a tablet, a computer or other device that can be used to capture images transmitted by the camera.

In one embodiment of the present invention, the endoscope is attached to a computing device via wireless USB connection. Transmission from the camera to the computing device occurs wirelessly.

The present invention also discloses a method for detecting bed bugs using the apparatus disclosed herein. In one embodiment of the present invention, the endoscope is connected to a smartphone using a wireless connection. The endoscope is elongated so that the telescoping feature is enabled. The light attached to the endoscope is turned on. The examiner places the camera end of the endoscope against the area to be searched, including spaces between a mattress and a box spring, under a bed, behind a headboard and small cracks in the area surrounding the sleeping area or other pieces of furniture. Images of the inspected space are captured and transmitted to a computing device. Where the transmitted image discloses a bed bug, the presence of a bed bug infestation in the inspected space is confirmed.

In another embodiment of the present invention, a software program or mobile application on the computing device is used to guide inspection, instruct the examiner, capture images, save images, and/or transmit images to another device.

## Claims

1. An apparatus for inspecting for bed bugs, the apparatus comprising:
an endoscope; and
a computing device.

2. The apparatus disclosed in Claim 1, further comprising a mirror.

3. The apparatus disclosed in Claim 1 or Claim 2, further comprising a light.

4. The apparatus disclosed in Claim 1, further comprising a telescoping handle.

5. The apparatus disclosed in Claim 1, wherein the endoscope may be bent.

6. The apparatus disclosed in Claim 1, further comprising a spacer with two points.

7. An apparatus for detecting bed bugs, the apparatus comprising:
a light component;
a camera component; and
a spacer with two points for stabilizing the apparatus during inspection and capturing of an image taken by the camera component that is to be transmitted to a receiving device.

8. The apparatus disclosed in Claim 7, further comprising a removable shark fin attachment.

9. The apparatus disclosed in Claim 7, further comprising a wireless connection.

10. A method for detecting bed bugs using the apparatus described in Claim 7, the method comprising:
linking the apparatus to a smart phone;
inspecting a bed for bed bugs; and
capturing images of an infestation with the apparatus.

11. The method described in Claim 10, further comprising a software application for inspecting, capturing and reporting bed bug infestations.
